# EUROPEAN PATENT APPLICATION

(11) **EP 4 635 715 A1**
(43) Date of publication of application: **22.10.2025**
(21) Application number: 25163936.5
(22) Date of filing: 14.03.2025
(51) Int. Cl.: B29C 51/04, B29C 51/16, D21J 1/10, D21J 3/10, B29C 51/00, B29C 51/10, B29C 51/14, B29C 51/26, B29C 51/30, B29C 51/42, B29C 51/46, B29K 1/00, B29K 67/00, B29K 311/10, D21J 5/00, B29L 9/00, B29L 31/00, B65B 47/02

(54) **METHOD AND SYSTEM FOR MANUFACTURING A MOULDED FIBER PACKAGING UNIT WITH A LAMINATED LAYER**

(30) Priority: 16.04.2024 NL 2037469
(71) Applicant: Huhtamaki Molded Fiber Technology B.V., 8938 AN Leeuwarden (NL)
(72) Inventor: TIEKSTRA, Grietje Rosanne, 8938 AN Leeuwarden (NL); ZWAAGSTRA, Hendrik Uiltje Pieter, 8938 AN Leeuwarden (NL); ROBINSON-MEECH, Chrissy, 8938 AN Leeuwarden (NL); ELGERSMA, Daniel, 8938 AN Leeuwarden (NL); NIEMARKT, Christian, 8938 AN Leeuwarden (NL); KUIPER, Evert, 8938 AN Leeuwarden (NL); ROTTEVEEL, Rink, 8938 AN Leeuwarden (NL); KERNAGHAN, James, 8938 AN Leeuwarden (NL); NIJHOLT, Peter Catherinus, 8938 AN Leeuwarden (NL)
(74) Representative: Arnold & Siedsma

(57) **Abstract**

The invention relates to a method (2) for manufacturing a moulded fiber packaging unit (46, 52, 72, 92, 102, 202, 302, 402, 502, 602), the method comprising the steps of:
- preparing (4) a mouldable fiber material (22);
- forming (6) the mouldable fiber material in a mould into a primary packaging unit (30) with a compartment;
- bringing (10) the primary packaging unit to a lamination temperature;
- providing (13a) a laminate layer (58);
- positioning (12) a lamination plug (54) with the laminate layer at least partly in the compartment of the primary packaging unit; and
- attaching (16) the laminate layer to the fiber material of the packaging unit.

## Description

The invention relates to a method for manufacturing a moulded fiber packaging unit comprising a laminate layer. These packaging units are made from moulded pulp material and are typically used to contain, store, transport, cover and/or display a range of products, such as food products. The laminate layer provides a barrier function to improve food safety, for example. The packaging unit may relate to containers, carriers, covers, lids, cases, cups, plates, trays et cetera.

The moulded fiber packaging unit can be manufactured in a wet moulding process with a pulp matrix, optionally involving a foamed pulp matrix, and/or a dry laid process with a "fluffy" pulp matrix.

Conventional packaging units that are provided with a laminate layer are typically manufactured by moulding the packaging unit, whereafter a separate lamination operation is performed. In such lamination operation a laminate layer is typically glued to the fiber material of the packaging unit. This involves providing an adherence or intermediate layer. This requires performing additional manufacturing steps with additional equipment and tooling. Furthermore, the stretch pattern of the laminate layer is often difficult to predict and even more difficult to control. This may result in undesired product loss.

The present invention has for its object to obviate or at least reduce one or more of the above stated problems in conventional manufacturing processes for moulded fiber packaging units and to provide a manufacturing method that is both cost effective and provides high-quality packaging units comprising a laminate layer.

For this purpose, the present invention provides a method for manufacturing a moulded fiber packaging unit, the method comprising the steps of:
- preparing a mouldable fiber material;
- forming the mouldable fiber material in a mould into a primary packaging unit with a compartment;
- bringing the primary packaging unit to a lamination temperature;
- providing a laminate layer;
- positioning a lamination plug with the laminate layer at least partly in the compartment of the primary packaging unit; and
- attaching the laminate layer to the fiber material of the packaging unit.

The moulded fiber packaging unit that is manufactured in a method according to the present invention can be manufactured in a wet moulding process with a pulp matrix and/or a dry laid process with a "fluffy" pulp matrix. In a wet moulding process the pulp matrix is provided to the mould(s) and after moulding the products are dried. Optionally, this may involve a foaming step to provide a foamed material to the mould(s). Alternatively, in a dry laid process, the pulp matrix can be supplied as sheets or reals that can be fed into a hammer mill, or similar device, also known as defibrator, that separates compressed rolls or sheets of the pulp into individual, loose fibers, which are then transported to the web forming system that forms the moulded fiber packaging unit. Typically, the dry-forming process requires a low energy consumption of 20 to 35% in comparison with wet-forming such that also the carbon footprint is significantly lower, with in some cases a higher production speed.

Preparing and providing a mouldable fiber material typically involves providing an amount of fiber material. This fiber material may have different origin, such as wood and/or non-wood fiber material, optionally from a recycling process such as from recycled paper material.

Optionally, according to one of the presently preferred embodiments of the invention, preparing the mouldable pulp material comprises providing fiber material that optionally comprises an amount of non-wood fiber material. The non-wood fiber material is also referred to as natural and/or alternative fibers. Providing an amount of these fibers provides a natural feel to the moulded fiber packaging unit and/or improves the overall strength and stability of the moulded fiber packaging unit. Such non-wood fibers may comprise fibers from different origin, specifically biomass fibers from plant origin. Examples of this biomass of plant origin are described in WO 2021/145764 A1.

After preparing a mouldable fiber material the primary packaging unit is formed in a mould. Such moulding involves bringing the material into the desired shape of the primary packaging unit with a compartment capable of carrying or holding a product, such as a food product.

Then, the primary packaging unit is brought to a lamination temperature, preferably with the use of heating means. Preferably, the heating and provision of a laminate layer is performed in the forming mould.

Optionally, the forming step is performed such that the moisture content, and preferably the moisture distribution, is regulated to a moisture content preferably in the range of 10 wt% to 20 wt%, such that the primary packaging unit can proceed to the further processing steps directly or shortly after the forming step is performed.

In one of the presently preferred embodiments, after the forming step, an acclimatization step is performed. Such acclimatization step may involve cooling and/or homogenization of moisture content. Such homogenization of moisture content may involve moisture intake by the packaging unit. The homogenization step for the primary packaging unit after the forming step will preferably take at least two hours to improve consistency and moisture distribution to achieve a desired moisture homogenization. Optionally, a temperature treatment is performed on the packaging unit, for example using (mould) parts with a holding time of, for example, 2 seconds to 6 seconds. Moisture homogenization and/or temperature treatment of the primary packaging unit to the lamination temperature can be performed in a single step or in multiple steps, such as two steps. The use of multiple steps reduces the risk of steam forming that may negatively influence the quality of the end product.

In a further presently preferred embodiment, after forming, the primary packaging unit is subjected to a moisturizing step. This may involve placing the packaging unit in an environment with humid conditions and/or providing a moisturizer that may spray water on the packaging unit. Preferably, the moisturizing step is performed in a time period of a few seconds to a few minutes. This renders it possible to proceed with the further processing of the packaging unit shortly after the forming step is performed. Such moisturizing step is preferably performed as an alternative to the aforementioned acclimatization step, although both steps can also be combined to further improve the moisture distribution.

According to the method of the invention, after providing (optionally including preparing) the laminate layer, a lamination plug with this laminate layer is positioned at least partly in the compartment of the primary packaging unit. The lamination plug brings the laminate layer close to the fiber material of the primary packaging unit.

The lamination process can be performed in the forming mould, however, also a separate lamination process can be performed outside the forming mould. Examples of such laminate layer are mentioned in the aforementioned WO 2021/145764 A1. This document provides several examples including a multi-layer laminate layer having five layers including an inner and outer cover layer, first and second intermediate layers of a biodegradable material for connecting and/or sealing adjacent layers, and a functional layer that preferably comprises a polyvinyl alcohol. It will be understood that other suitable laminate layers can also be envisaged in accordance with the present invention.

As a next step of the method according to the present invention, and after positioning the lamination plug with the laminate layer at least partly in the compartment of the primary packaging unit, the laminate layer is attached to the fiber material of the packaging unit. In the presently preferred embodiment of the invention, the attachment of the laminate layer to the fiber material is done directly, i.e. without use of any adhesives or glue. This reduces the number of materials that is used in the manufacturing of the moulded fiber packaging unit. This is especially beneficial when dealing with food products.

According to the invention, positioning the lamination plug in the compartment of the primary packaging unit comprises the step of at least partly entering the compartment with the lamination plug to a lamination distance from a bottom of the compartment, and further comprising the step of blowing and/or drawing the laminate layer over the lamination distance to the bottom of the compartment.

Maintaining a distance between the lamination plug and the fiber material of the primary packaging unit enables blowing and/or drawing the laminate layer over this lamination distance towards the packaging unit. Blowing preferably involves the provision of venting holes or nozzles that are configured for blowing the laminate layer to the fiber material. Such holes or nozzles, or other suitable means, can be arranged around or in the lamination plug and/or mould, for example. Drawing preferably involves the creation of underpressure between the laminate layer and fiber material such that the laminate layer is drawn towards the fiber material. An underpressure can be achieved by suction means that are arranged around or in the mould, for example.

Due to the pressure difference over the laminate layer that is achieved by blowing and/or drawing, the laminate layer is moved over the lamination distance, and attached (connected) to the fiber material of the primary packaging unit. Therefore, according to this presently preferred embodiment of the invention, the laminate layer is partly moved into the compartment with the lamination plug, and the remaining distance or depth is travelled by the laminate layer using at least one of blown air (or any other suitable gas) and vacuum (underpressure). The lamination plug is preferably made of a low-density material to have minimal heat capacity and to limit the effective working temperature, preferably limited to 50°C, to ensure that the plug has a controlled influence on the stretching of the laminate layer. It is noted that when attaching the laminate layer to the fiber material, this fiber material may have an elevated temperature, for example 100°C. Preferably, hot air is (also) used to bridge the distance between the laminate layer towards the vertical part of the rim and/or side walls of the packaging unit to also achieve correct bonding of the laminate layer to this area.

It is noted that also a combination of blowing and drawing/suction can be applied to further enhance the attachment of the laminate layer to the fiber material of the packaging unit.

Attaching the laminate layer to the fiber material of the packaging unit with a combination of positioning the lamination plug and blowing and/or drawing the laminate layer over a lamination distance to the fiber material, achieves a thorough bonding of the laminate layer to the fiber material. For example, wrinkles in the laminate layer can be avoided or at least significantly reduced. Also, the structural integrity of the laminate layer is maintained so that no breaks, cracks or holes will be present after attaching the laminate layer to the fiber material of the packaging unit. As a further effect the stretch pattern can be controlled such that the thickness of the laminate layer in particular areas can be correctly achieved.

A further advantage of the manufacturing method according to the present invention is that the method is capable of providing a biodegradable and even compostable packaging unit of a mouldable pulp material. In the context of this invention, degradable relates to degradation resulting in loss of properties, while biodegradable relates to degradation resulting from the action of microorganisms such as bacteria, fungi and algae. Compostable relates to degradation by biological process to yield carbon dioxide (CO2), water, inorganic compounds and biomass. Preferably, the container is home compostable (e.g. according to EN 13432:2000, EN 14046:2004 in Europe and AS 5810 "biodegradable plastics suitable for home composting" in Australia).

According to the invention the method further comprises the step of stretching the laminate layer.

During the positioning of the plug and/or during the blowing and/or drawing of the laminate layer towards the fiber material of the packaging unit, the laminate layer is stretched. Preferably, the laminate layer (film) is provided with a uniform thickness and the stretching enables a controlled variation of the thickness over the laminate layer. As already indicated, the combination of positioning the lamination plug with the laminate layer, and bridging the lamination distance with blowing and/or drawing the laminate layer towards the fiber material of the packaging unit, a controlled stretch pattern can be achieved. In such embodiment, stretching the laminate layer comprises providing one or more weaker areas in the laminate layer to enable piercing of such area. Such weaker area can be important when penetration or piercing of the packaging unit is desired, and preferably comprises less material as compared to the average wall part of the packaging unit. This can be achieved by providing a thinner wall for the weaker area and/or provide material with a lower density. Examples of such penetration or piercing include the use of straws for packaging units containing liquid, piercing a weaker opening area of the packaging unit to enable access to the contents of the packaging unit and/or enable removal of the contents from the packaging unit, such as from liquid containers. Performing a controlled stretching operation for the laminate layer achieves an effective lamination process that provides a relatively easy pierceable part of the lamination layer and therefore also the packaging unit. The controlled stretching operation preferably involves positioning the lamination plug at a lamination distance from a bottom of the compartment, blowing and/or drawing the laminate layer over the lamination distance to the bottom of the compartment with the assistance of nozzles/suction means that are provided such that a particular and specifically dedicated part of the laminate layer is stretched further as the average stretching of the laminate layer and transforms into a weaker are that is relatively easy pierceable. It will be understood that the location (and design) of the nozzles/suction means depends on the product design including the specific location of the pierceable part. This preferably involves the step of positioning the nozzles and/or suction means such that the weaker area of the lamination layer (substantially) corresponds with the pierceable part of the packaging unit. Such (controlled) stretching operation provides the packaging units with a dedicated weaker part that corresponds with the intended (easy) pierceable part, as a weaker opening area of the packaging unit, that is easy to use for a consumer, for example when it is desired to remove the contents from a liquid container in the preparation process of a beverage.

In a presently preferred embodiment of the invention, the lamination plug moves during the positioning thereof over about 60 to 90% of a depth of the compartment of the packaging unit, preferably 70 to 80%, and most preferably about 75% of this depth.

The moving distance of the lamination plug preferably depends on the dimensions of the compartment of the packaging unit. Tests have revealed that a moving distance of the lamination plug in the aforementioned ranges results in a good lamination effect having an advantageous stretch pattern of the laminate layer, achieving a correct bonding of the laminate layer to the fiber material of the packaging unit, and maintaining the structural integrity of the laminate layer. The lamination distance, for example 25% of the depth (or height) of the compartment of the packaging unit, is then bridged by applying a pressure difference of the laminate layer, or more specifically by providing a pressure difference involving blowing and/or drawing. This further enhances the control of the stretch pattern of the laminate layer.

In a further preferred embodiment of the invention the lamination plug moves into the compartment at a speed in the range of 200 mm/sec to 400 mm/sec, preferably in the range of 250 mm/sec to 350 mm/sec, and is most preferably at a speed of about 300 mm/sec.

The speed of the lamination plug may influence the stretch pattern and to some extent also the structural integrity of the laminate layer. A speed in the aforementioned ranges enables a controlled application of the laminate layer to the packaging unit. Too low or too high speeds may tear the film due to cooling at slow speeds and due to force at high speeds, for example.

During the movement of the lamination plug into the compartment, the primary packaging unit is preferably brought and/or maintained at an elevated temperature in the range of 100°C to 160°C, preferably in the range of 110°C to 150°C, and is most preferably in the range of 120°C to 140°C.

Bringing and/or maintaining the primary packaging unit at the lamination temperature in one of the aforementioned ranges achieves a good bonding of the laminate layer to the fiber material of the packaging unit.

Tests have shown that the correct combination of blowing/drawing the laminate layer from the plug over a lamination distance to the fiber material to packaging unit, in combination with correct heating of the primary packaging unit to a temperature in the range of 100° degrees to 160°, most preferably in the range of 120° to 140°, and in combination with the correct lamination plug speed, which is for example in the range of 250 mm/sec to 350 mm/sec, provides an effective attachment of the laminate layer to the fiber material of the packaging unit with a desired stretch pattern, effective bonding and maintaining the structural integrity of the laminate layer.

In a further preferred embodiment of the present invention, providing a laminate layer comprises the step of preheating at least a part of the laminate layer.

Preheating the laminate layer may improve stretch pattern, bonding and/or structural integrity of the laminate layer to the fiber material of the packaging unit. The preheating is preferably done to a temperature of up to 150°C. This preheating may involve the step of contacting the laminate layer with a contact tool. Such contactable tool is preferably coated with a special coating that is known to the skilled person. Preheating a part of the laminate layer may reduce the risk of undesired shrinkage. The contact tool is preferably dome-shaped to enable correct stretching of the laminate layer. Such contact tool can be provided with one or more holes configured for allowing gas to flow through these holes enabling an escape of this gas. Optionally, a further calibration step can be performed to calibrate the dimensions of the packaging unit. Such calibration step is optionally performed in combination with a heating step as an integrated or two-process step.

In a further preferred embodiment of the present invention the method further comprises the step of detecting holes in a laminate layer.

Holes in the laminate layer may negatively influence the quality of the packaging unit which may also negatively influence the quality of the products that are kept in the compartment of the packaging unit. Such detection can be performed with the step of applying a pressure difference over the laminate layer.

The invention further relates to a system for manufacturing a moulded fiber packaging unit with a laminate layer, wherein the system is configured for performing the method according to an embodiment of the present invention.

Such system provides the same or similar effects and special advantages as described in relation to the method.

In a presently preferred embodiment of the invention, the system further comprises control means configured for controlling at least a movement of the lamination plug, attaching the laminated layer to the fiber material through blowing or drawing, and heating at least a part of the laminate layer. The relevance of controller at least these three steps was explained in relation to an embodiment of the method according to the invention. More specifically, such combination of blowing/drawing, heating and plug speed enables a correct attachment of the laminate layer to the fiber material of the packaging unit with a desired stretch pattern, correct bonding and maintaining structural integrity. Optionally, if desired, one or more weaker areas can be designed in the laminate layer with the correct settings during the manufacturing process such that these weaker areas can be relatively easily penetrated or pierced.

With the manufacturing method and/or system a packaging unit can be manufactured from a moulded pulp material. Therefore, the invention also relates to such packaging unit of moulded fiber material. These packaging units may relate to containers, carriers, covers, lids, cases, cups, plates, trays et cetera.

It will be understood that relevant features of the different embodiments of the invention that are described here can also be combined in other embodiments of the invention.

Further advantages, features and details of the invention are elucidated on the basis of preferred embodiments thereof, wherein reference is made to the accompanying drawings, in which:
- Figures 1A-B show embodiments of a manufacturing method according to the invention;
- Figure 2 shows a system for a lamination operation of a packaging unit that is manufactured with a method of figure 1;
- Figures 3A-B show examples of packaging units manufactured according to the method of the present invention;
- figures 4-9 show examples of packaging units manufactured according to the method of the present invention; and
- figures 10 A-B show some examples of a laminated layer that can be applied to the packaging units manufactured with the method according to the present invention.

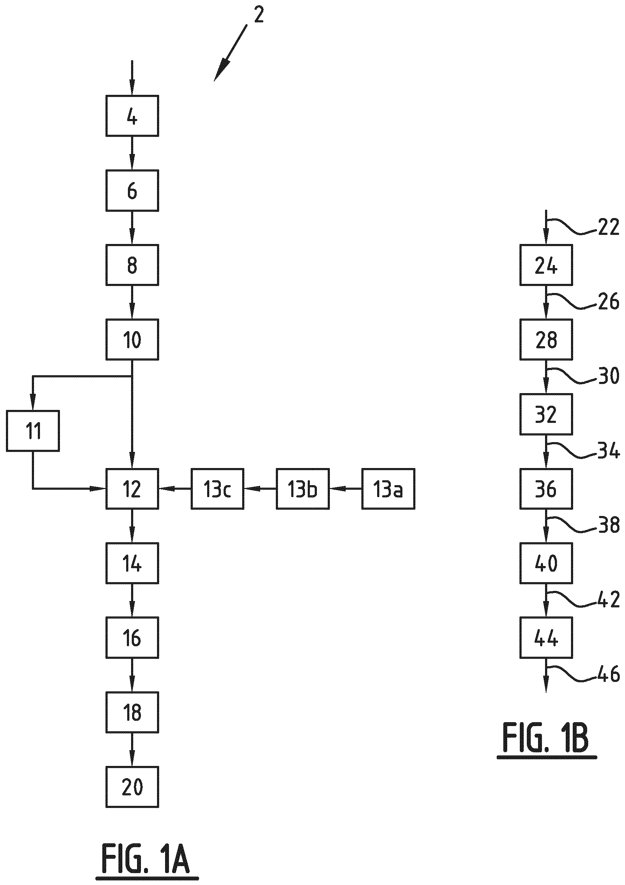

Manufacturing method 2 (figure 1A) starts with preparing step 4 for preparing a mouldable fiber material. This may involve application and/or mixing of wood fiber material and/or non-wood material such as alternative fibers. Wood material may involve so-called virgin fibers and/or fibers from recycled paper material, for example. The preparation may result in a slurry for a moulding process, optionally having a foaming agent to enable manufacturing of a foamed packaging unit. Alternatively, preparation step 4 may result in a fluffy pulp matrix to enable a so-called dry laid process.

Forming step 6 produces the primary packaging unit that can be cooled/dried with cooling or drying step 8. Heating step 10 heats the primary packaging unit to the lamination temperature. Optionally, calibration step 11 is performed. A laminate layer is provided by manufacturing step 13a for manufacturing the laminate layer, testing step 13b for testing the laminate layer, and laminate positioning step 13c for positioning the laminate layer relative to a lamination plug, whereafter positioning step 12 is performed to bring the plug with the laminate layer into the compartment of the packaging unit. Using blowing/drawing (suction) in blowing/drawing step 14 enables the laminate layer to bridge the lamination distance between the plug and the bottom of the compartment in a controlled manner. The blowing/drawing (suction) is preferably designed such that a dedicated area of the laminate layer is stretched more and forms a weaker area, wherein the weaker area corresponds to a relatively easy pierceable part. This preferably comprises the step of positioning nozzles and/or suction means for stretching the laminate layer such that the weaker area of the lamination layer substantially corresponds with a pierceable part of the packaging unit. This achieves a controlled stretching operation. In attachment step 16 the laminate layers attach to the fiber material of the packaging unit. The packaging unit is released in releasing step 18 and is ready for further processing in processing step 20.

From method 2 it will be understood that raw material 22 (figure 1B) is used as starting material and is then treated using devices 24, including devices such as a hammer mill, a defibrator, and a mixer. With this starting material slurry/blanket 26 is provided as a result of preparing step 4. Slurry/blanket 26 is then provided to a form or mould 28 of a pressing device to perform forming step 6. Such pressing results in primary packaging unit 30 that is then dried or cooled in dryer 32 in drying step 8 to provide a dried primary packaging unit 34. Typically, after a waiting time of, for example, at least two hours, as an acclimatization step and/or after an active moisturizing step, the moisture in dried primary packaging unit 34 is better distributed and the dried primary packaging unit 34 can be heated with heater 36 in heating step 10 to achieve a preheated primary packaging unit 38 that is ready for lamination in positioning step 12 in laminator 40 to provide laminated packaging unit 42. Optionally, after lamination in attachment step 16 and releasing step 18, further devices 44 can be applied to further process laminated product 42 into end-product 46 in processing step 20.

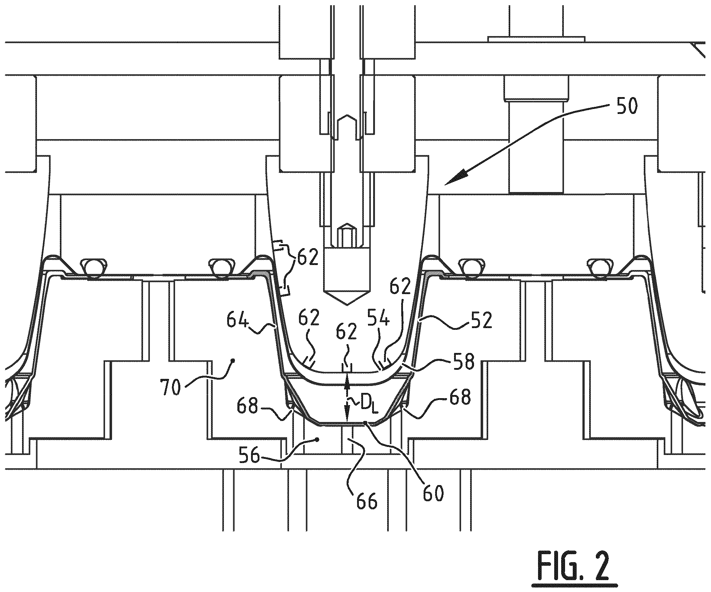

System 40 (figure 2) is provided with packaging unit 52 that is dome-shaped in the illustrated embodiment. Plug 54 is positioned into compartment 56 of packaging unit 52. In the illustrated embodiment laminate layer 58 is brought into compartment 56. Plug 54 is brought to a position at a distance D_{L} from bottom 60 of packaging unit 52. Ventilation holes, blower openings or nozzles 62 are schematically illustrated in association with plug 54. It will be understood that these elements 62 can be provided in several ways to enable blowing laminate layer 58 towards bottom 60 of packaging unit 52. Optionally, blowing means 62 are provided that also blow laminate layer 58 towards side walls 64 of packaging unit 52. Also schematically illustrated are exhaust hole(s) 66 and outlets 68 that may enable removal of air from compartment 56. These elements 66, 68 enable providing an underpressure in compartment 56 between laminate layer 58 and bottom 60 of packaging unit 52. In this illustrated embodiment packaging unit 52 is positioned in mould 70 of system 40. Blowing/drawing (suction) elements 62, 66, 68 are preferably designed such that a dedicated area of the laminate layer is stretched more in a controlled stretching operation and forms a weaker area, wherein the weaker area corresponds to a relatively easy pierceable part of packaging unit 52.

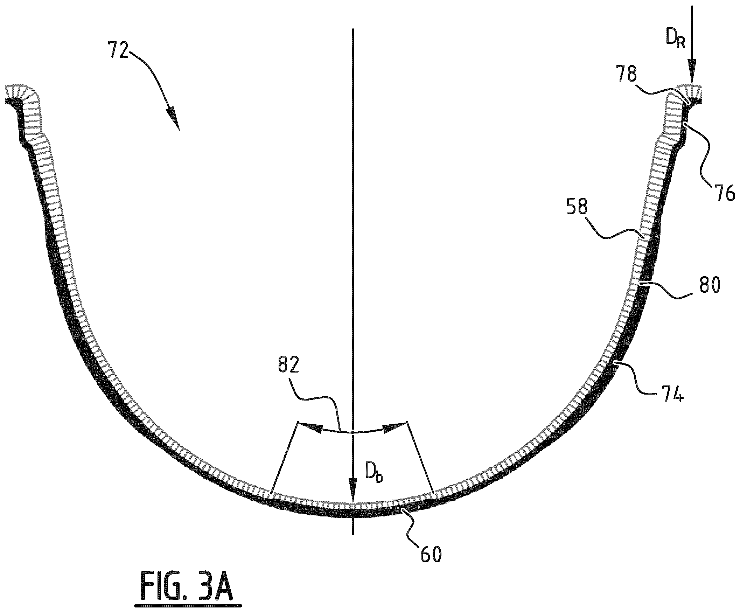

Packaging unit 72 (figure 3A) comprises fiber material 74 that is provided with laminate layer 58 having a varying thickness. Packaging unit 72 is provided with bottom part 60, edge 76 and rim 78. Laminate layer 58 is bonded to fiber material 74 with bond 80 that preferably consists of direct bonding of material of the laminate layer 58 with fiber material 74. At rim 78, laminate layer 58 is provided with thickness D_{R} and at bottom 60 with thickness D_{B}. From a starting thickness of the laminate layer of about 150 µm, at rim 78, thickness D_{R} is typically about 150 µm and, at bottom 60, thickness D_{B} is typically in the range of 20 to 50 µm. In this illustrated embodiment there is provided weak(er) area 82 with a reduced thickness of laminate layer 58. In this embodiment, weak(er) area 82 corresponds to the intended easy pierceable part of packaging unit 72.

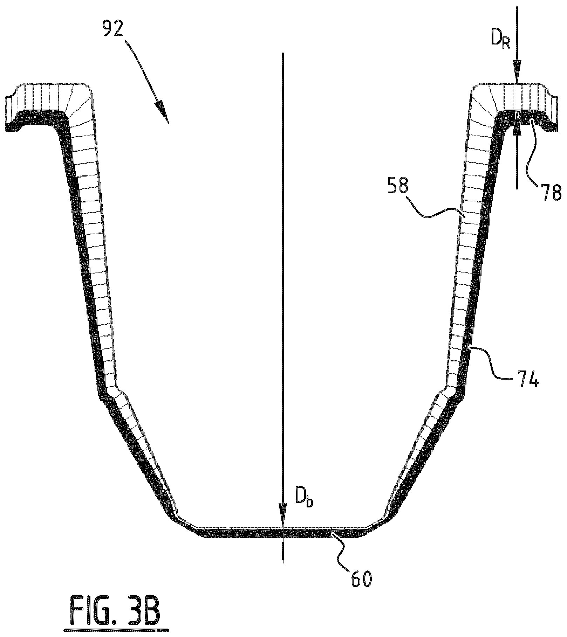

In an alternative embodiment packaging unit 92 is cup-shaped (figure 3B) having similar components as already illustrated for packaging unit 72 (figure 3A).

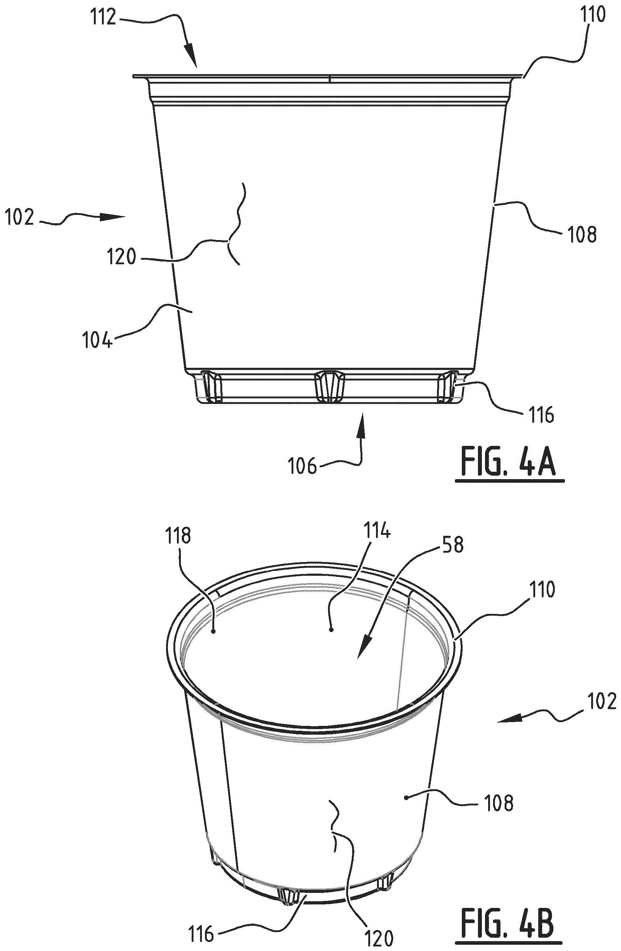

Packaging unit 102 (figure 4A-B) comprises cup-shaped container body 104 having bottom 106 and side wall 108. Flange or rim 110 is configured for optionally receiving seal 112 thereon. The inside of packaging unit 102 defines product compartment 114. In this illustrated embodiment an additional support 116 is provided at bottom 106. Laminate layer 58 is provided to inner walls 118 of compartment 114. Optionally, fibers 120 are provided in body 104 that preferably remain visible for a consumer.

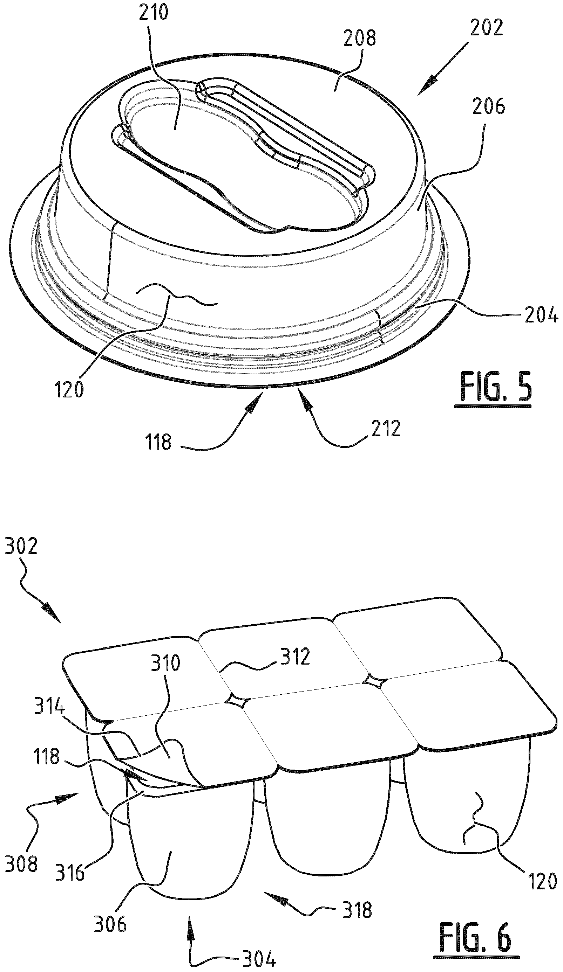

Moulded fiber lid 202 comprises edge 204 (figure 5), side wall 206 and top 208 that is provided with embossment 210 capable of receiving further components such as spoon. Rim 212 may connect to another packaging unit such as a cup or container, for example. Optionally, fibers 120 are visible. Laminate layer 118 is provided on the inside of packaging unit 202.

In a further packaging unit 302 (figure 6) six sub-units are connected together that are capable of holding yoghurt products and comprise bottom 304 and side wall 306 that define compartment 308 in each individual sub-unit of packaging unit 302. Seal 310 is used to cover compartment 308, with edge 314 that can be used to peel off sealing lid 310. The inside of compartment 308 is provided with laminate layer 58. Seal 310 is connected to rim 316 of packaging unit 302.

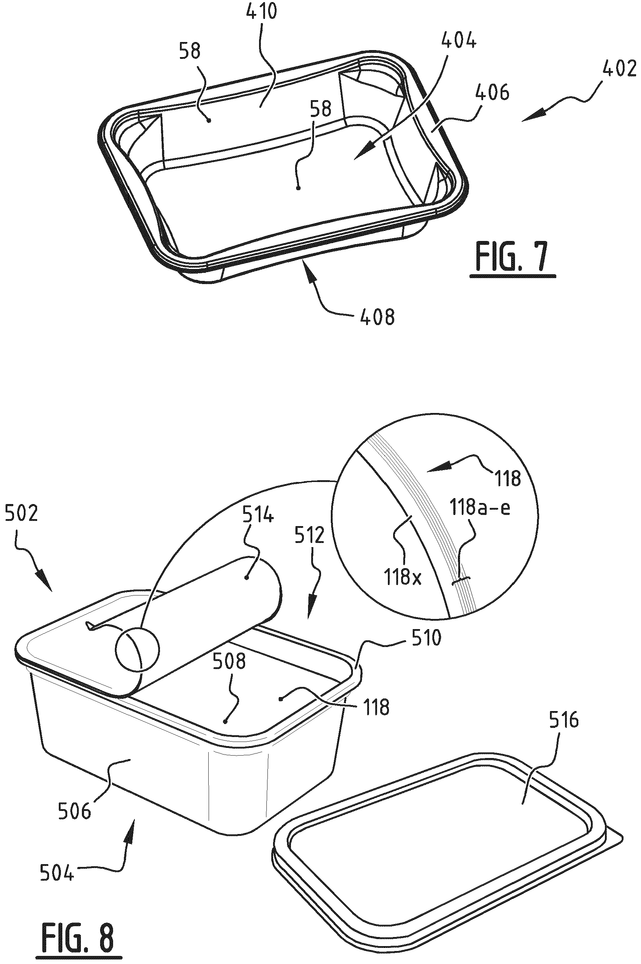

Packaging unit 402 may be used as meat tray/dish (figure 7) and comprises bottom 404, rim 406, outer side walls 408 and inter side walls 410. Bottom 404 and inner side walls 410 are provided with laminate layer 118.

Packaging unit 502 (figure 8) can be used to contain margarine or butter, for example. Packaging unit 502 comprises bottom 504 and side walls 506 that define compartment 508. Compartment 508 is provided with laminate layer 118. Rim 510 defines opening 512 that can be sealed with seal 514 and can optionally be covered with cover 516. Laminate layer 118 is applied to compartment 508 and optionally also to seal 514. In the illustrated embodiment, laminate layer 118 comprises a number of layers 118a-e that are provided on a base layer 118x.

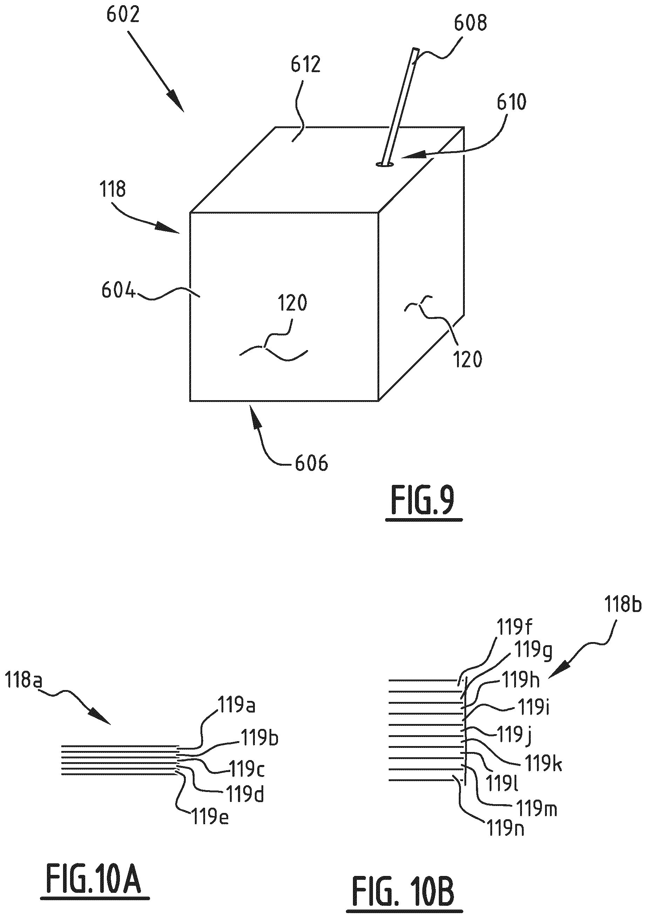

Packaging unit 602 (figure 9) schematically illustrates a drinking package having side wall 604 and bottom 606. Straw 608 can be inserted into packaging unit 602 at opening element 610 that represents a weak(er) part of layer 118. This such weak(er) part is preferably provided in top 612 of packaging unit 602. Optionally alternative fiber elements 120 are applied.

In the illustrated embodiment laminate layer 118a is a multi-layer (figure 10A) comprising first cover layer 119a, first intermediate layer 119b, central functional layer 119c, second intermediate layer 119d, and second cover layer 119e. It will be understood that other layers can be added to multi-layer 118 to provide alternative laminate layers 118. It will also be understood that laminated multi-layer 118 can be applied to the (illustrated) packaging units or to further alternative embodiments that are not illustrated.

An alternative biodegradable laminate layer 118b, which is also a multi-layer (figure 10B), comprises first cover layer 118f, first intermediate layer 118g, first functional layer 118h, second intermediate layer 118i, central flexible layer 118j, third intermediate layer 118k, second functional layer 1181, fourth intermediate layer 118m, and second cover layer 118n. It will be understood that other layers can be added to multi-layer 118b. It will be understood that laminated multi-layer 118b can be applied to the packaging units that are illustrated or are not illustrated.

Multi-layer 118a,b may comprise different materials. Examples are described in the aforementioned WO 2021/145764 A1. The thickness of individual layers can be determined taking into account the (food) product that is/will be contained in the packaging unit. Typically, in laminate layer 118, 118a, 118b, the inner and outer cover layers may comprise an amount of a biodegradable aliphatic polyester, such as poly(butylene succinate) also referred to as PBS, and/or one or more of the other suitable polyesters that were mentioned earlier in this description. This improves the surface properties of the biodegradable (laminated) multi-layer, and also of any packaging unit provided therewith, such as the so-called wipeability, possibilities for masking (hiding) undesirable stains and/or promoting the compostable effect of the packaging unit, grease resistance, reduction penetration of oil originating from the food product, improving water barrier properties, reducing ridging problems. Functional (central) layers 118c, 118h, 1181 may comprise a biodegradable and compostable polyvinyl alcohol, also referred to as a vinyl alcohol polymer, including co-polymers. This functional layer contributes to the multi-layer properties, such as acting as a gas barrier. For example, the functional layer may provide an effective oxygen (O₂) barrier. This improves shelf-life of the food product(s) in the packaging unit. In the illustrated embodiment the vinyl alcohol polymer comprises a highly amorphous vinyl alcohol polymer (HAVOH), such as butandiol vinyl alcohol co-polymer (BVOH). Such polymer or polymer mixture also provides an effective barrier, especially a gas barrier, and more specifically an oxygen (O₂) barrier. Such barrier can effectively be used to further improve the shelf-life of the food product(s) and reduce food waste. In experiments a surprisingly effective oxygen (O₂) barrier was achieved, especially at relative humidities up to 60% as compared to conventional materials. An example of BVOH is G-Polymer. The inner and outer cover layers are preferably separated from the central functional layer by an intermediate layer, to which can also be referred to as a tie layer. Such intermediate layer is substantially of a biodegradable material and connects and/or seals its adjacent layers.

End-product 46 comprises a moulded fiber material that is provided with fiber material originating from one or more different sources, including wood and/or non-wood fiber material. In addition, this may also include an amount of microfibrillated cellulose (MFC) and/or an amount of biodegradable aliphatic polyester, such as PLA and/or PHBT. Optionally, an amount of calcium carbonate is applied. In one of the examples according to the present invention 3.9 wt% of MFC is applied in the moulded fiber product, in combination with 3.7 wt% of biodegradable aliphatic polyester and in particular PHBT, and an amount of 1.0 wt% of calcium carbonate. Examples with and without the use of non-wood fiber material have been tested. In some of these examples an amount of soya fibers and/or rice husks and/or almond or coconut shells is applied in the plant-based fiber material. In such moulded fiber product, fibers originating from wood are combined with an amount of about 49 wt% of alternative (non-wood) fibers. It will be understood that also other amounts of non-wood fiber material can be provided, such as at least 5 wt% of the matrix of the product receiving body, preferably at least 10 wt%, preferably at least 50 wt%, even more preferably at least 80 wt%, even further more preferably at least 85 wt%, and most preferably at least 92.5 wt%. It was shown that moulded fiber packaging units can be manufactured effectively from the non-wood fiber material in such significant amounts. Optionally, further additives are applied, such as Xerolex (or BIM DS2801) as dry strength agents and/or AKD.

Preferably, the mouldable fiber material comprises an amount of alternative non-wood fiber material, wherein the fibers optionally remain visible on the old fiber product. This is illustrated with fibers 120 that are preferably present on the outer surface of some of the illustrated packaging units. In some of the embodiments, the matrix of the moulded fiber material comprises an amount of non-wood fibers, wherein at least 80 percent of the fibers has a length above 1.1 mm, preferably above 1.2 mm. This provides a significant length increase of the fibers that are provided in the moulded pulp material as compared to most conventional packaging units. Providing fibers of the biodegradable polyester achieves a network of moulded and biodegradable polyester fibers in the moulded fiber matrix. This results in an increased strength-weight ratio for the packaging unit.

In addition, or as an alternative to non-wood fiber material, the matrix of the moulded fiber product further may comprise an amount of the aforementioned microfibrillated cellulose (MFC). In the context of the present invention this may also include nanofibrillar cellulose or cellulose nanofibers or nanocellulose. MFC preferably originates from cellulose raw material of plant origin. The use of MFC enhances the fiber-fiber bond strength and further improves the reinforcement effect in the matrix. According to such embodiment of the invention MFC provides improved barrier properties. MFC may fill the gaps between the fibers and, therefore, has gas barrier properties, for instance an enhanced oxygen barrier. When MFC is modified, e.g. the carboxyl groups are replaced by a hydrophobic group, the modified MFC can enhance also the water vapor barrier. As a further advantage, a paper look and/or paper feel surface layer can be provided or improved. This paper look and/or paper feel surface layer contributes to the consumer's appreciation of the container according to the invention.

In addition, or as an alternative to non-wood fiber material and/or MFC, the matrix of the moulded fiber material comprises an amount of the aforementioned biodegradable polyester. Preferably, the biodegradable polyester is a biodegradable aliphatic polyester, a biodegradable aromatic polyester, and/or a biodegradable aromatic-aliphatic polyester. It is noted that a biodegradable aliphatic-aromatic polyester comprises an aromatic part and an aliphatic part. The biodegradable polyester can be provided in the matrix of pulp material of the packaging unit and/or in one or more laminate layers. The biodegradable polyester may relate to poly(butylene succinate) also referred to as PBS, polybutylene sebacate terephthalate also referred to as PBST, polyhdroxyalkanoate also referred to as PHA, for example including polyhdroxybutyrate also referred to as PHB and/or poly(3-hydroxybutyrate-co-3-hdroxyhexanoate) also referred to as PHBH and/or poly(3-hydroxybutyrate-co-3-hydrovalerate) also referred to as PHBV, polycaprolactone also referred to as PCL, poly(lactic acid) also referred to as PLA, poly(glycolic acid) also referred to as PGA, polybutyleneadipate-terephthalate also referred to as PBAT and also known with its commercial name ecoflex, and/or other suitable components, such as poly(alkylene dicarboxylate) other than PBS, PBAT and PBST, poly(lactic-co-glycolic acid) also referred to as PLGA, including mixtures or blends. It is noted that for example PBAT and PBST comprise an aromatic part and aliphatic part. Therefore, PBAT and PBST may also be referred to as biodegradable aliphatic-aromatic polyester (or biodegradable aromatic polyester). An example of a blend is a blend of PBAT and PLA, also known with its commercial name Ecovio, or a blend of PBAT and PBS, or another suitable blend that is preferably home compostable. In some of the presently preferred embodiments of the invention the biodegradable polyester is bio-based.

In one of the preferred embodiments of the invention the amount of biodegradable polyester in the moulded fiber matrix of the packaging unit is in the range of 0.5 wt% to 20 wt%, preferably in the range of 1 wt% to 16 wt%, more preferably in the range of 1 wt% to 15 wt%, even more preferably in the range of 2 wt% to 10 wt%, even more preferably in the range of 5 wt% to 9 wt%, and most preferably in the range of 6.5 wt% to 8 wt%.

In a further embodiment of the invention the amount of biodegradable polyester in the moulded fiber matrix is in the range of 0.1 wt% to 12 wt%, preferably in the range of 0.5 wt% to 8 wt%, more preferably in the range of 1 wt% to 5 wt%, and most preferably in the range of 2 wt% to 4 wt%.

The biodegradable polyester in the moulded fiber matrix improves the adherence of laminate layer 118 to the fiber material of the packaging unit. This effect is enhanced by incorporation of biodegradable polyester in cover layers of laminate layer 118, 118a, 118b.

The present invention is by no means limited to the above-described preferred embodiments thereof. The rights sought are defined by the following claims, within the scope of which many modifications can be envisaged.

## Claims

1. Method (2) for manufacturing a moulded fiber packaging unit (46, 52, 72, 92, 102, 202, 302, 402, 502, 602), the method comprising the steps of:
- preparing (4) a mouldable fiber material (22);
- forming (6) the mouldable fiber material in a mould into a primary packaging unit (30) with a compartment;
- bringing (10) the primary packaging unit to a lamination temperature;
- providing (13a) a laminate layer (58);
- positioning (12) a lamination plug (54) with the laminate layer at least partly in the compartment of the primary packaging unit; and
- attaching (16) the laminate layer to the fiber material of the packaging unit,
wherein positioning the lamination plug in the compartment comprises partly entering the compartment of the primary packaging unit with the lamination plug to a lamination distance (D_{L}) from a bottom (60) of the compartment, and further comprising the step of blowing and/or drawing the laminate layer over the lamination distance to the bottom of the compartment, further comprising the step of stretching the laminate layer, wherein stretching the laminate layer comprises providing one or more weaker areas (82) in the laminate layer to enable piercing of such area.

2. Method according to claim 1, wherein blowing or drawing the laminate layer comprises providing a blowing medium through one or more nozzles (62) arranged around or in the lamination plug.

3. Method according to claim 1 or 2, wherein blowing or drawing the laminate layer comprises providing an underpressure through suction means (66, 68) arranged around or in a mould (28, 70).

4. Method according to any of the foregoing claims, further comprising the step of positioning nozzles and/or suction means for stretching the laminate layer such that the weaker area of the lamination layer substantially corresponds with a pierceable part of the packaging unit.

5. Method according to any of the foregoing claims, wherein the lamination plug moves over about 60-90% of a depth of the compartment of the packaging unit, preferably 70 to 80%, and most preferably about 75%.

6. Method according to any of the foregoing claims, wherein the lamination plug moves into the compartment at a speed in the range of 200 mm/sec to 400 mm/sec, preferably in the range of 250 mm/sec to 350 mm/sec, and is most preferably about 300 mm/sec.

7. Method according to any of the foregoing claims, further comprising an acclimatization step for homogenization of moisture content of the primary packaging unit.

8. Method according to any of the foregoing claims, further comprising a moisturizing step.

9. Method according to any of the foregoing claims, wherein bringing the primary packaging unit to the lamination temperature comprises bringing the primary packaging unit to a temperature in the range of 100°C to 160°C, preferably in the range of 110°C to 150°C, and most preferably in the range of 120°C to 140°C.

10. Method according to any of the foregoing claims, wherein providing a laminate layer comprises the step of preheating at least a part of the laminate layer.

11. Method according to the foregoing claim, wherein preheating comprises the step of contacting the laminate layer with a contact tool (36).

12. Method according to any of the foregoing claims, further comprising the step of detecting (13b) holes in the laminate layer.

13. Method according to the foregoing claim, wherein detecting comprises the step of applying a pressure difference over the laminate layer.

14. System for manufacturing a moulded fiber packaging unit with a laminate layer, wherein the system is configured for performing the method according to any of the foregoing claims.

15. System (40) according to the foregoing claim, further comprising control means configured for controlling at least a movement of the lamination plug, attaching the laminate layer to the fiber material through blowing or drawing, and heating at least part of the laminate layer.
